# EUROPEAN PATENT SPECIFICATION

(11) **EP 0 934 469 B1**
(45) Date of publication and mention of the grant of the patent: **13.02.2002**
(21) Application number: 97951195.3
(22) Date of filing: 13.11.1997
(51) Int. Cl.: F16B 13/12

(54) **SCREW ANCHOR**
SCHRAUBENANKER
ANCRE A VIS

(30) Priority: 15.11.1996 IT PD960274
(43) Date of publication of application: 11.08.1999
(73) Proprietor: fischerwerke Artur Fischer GmbH & Co. KG, 72178 Waldachtal (DE)
(72) Inventor: MORASSUTTI, Paolo, I-35122 Padova (IT); MARZOLLA, Stefano, I-35100 Padova (IT)
(74) Representative: Alagem Modiano, Lara S.
(86) International application number: EP9706351
(87) International publication number: WO9822722

(56) References cited:
- DE-A- 1 936 360
- DE-A- 2 745 556
- DE-A- 2 840 087
- DE-A- 3 416 797
- US-A- 4 596 503

## Description

### Technical Field

The present invention relates to a screw anchor.

In particular, the present invention relates to a screw anchor which can be conveniently used for achieving anchorings or couplings to masonry walls or structures.

### Background art

Many screw anchors are available which utilize the principle of causing the expansion of a body inside a previously prepared hole, so that the body, by increasing in bulk, is anchored to the structure.

There are also several kinds of materials used for screw anchors: more particularly, there are screw anchors with a metal body and with a plastic body, which have different uses.

Among the latter, the construction type provides for a cylindrical expanding body with an axial cavity for the insertion and engagement of an expansion screw.

In the commonest and accordingly most widespread type of plastic screw anchor, the body is divided, starting from the end lying opposite to the screw insertion end, by a diametrical slot which divides said body, in the regions affected by the slot, into two sectors which, when the screw is inserted in the axial cavity, are pushed so that they diverge in mutually opposite radial directions starting from the region in which said slot ends.

Although this kind of screw anchor is widely used, as mentioned, it is not free from drawbacks, since it is particularly effective when inserted in holes of solid components, where the expanding action of its two sectors by virtue of the insertion of the screw is indeed effective, but it is practically ineffective for anchorings for example in hollow bricks.

In this case, the expanding action produced by the screw in fact causes the two body sectors to expand and diverge without encountering any contrast.

Coupling is therefore practically nonexistent and this can cause failures.

By way of example, mention should be made of the case in which the screw anchors fixed in a wall are used to support a given considerable load.

If the holes formed in the wall are all located in solid portions, the load is divided equally among the screw anchors; but if one or more holes are located at hollow bricks, the loads may be unbalanced and therefore distributed over a less than ideal number of screw anchors.

In this situation, some screw anchors may be subjected to a load which exceeds the prospected safety load and may therefore fail.

In order to solve this drawback, a screw anchor has recently been devised which has a plastic body which again has two longitudinally divided elements which in this case, however, are joined at both ends and are shaped so as to intersect with comb-shaped tabs which are mutually alternated in the dividing regions.

The tabs internally form an axial cavity for the insertion of the screw and shape it so that it is constituted by elliptical and non-concentric hole portions.

In this manner, the insertion of the expansion screw causes an alternating outward shift of the tabs as a function of the arrangement of the corresponding hole portion.

A radial expansion through of the translatory motion of sectors is provided which is different according to the shape of the hole in which the screw anchor is inserted.

In the case of a hole formed entirely within "solid" material, complete adhesion of the sectors to the walls of the hole is achieved, while in the case of expansion occurring in hollow material, the fractions of screw anchor located in "solid" regions adhere and those located in empty regions perform a translatory motion.

This causes the anchoring action to be effective in any case.

Although it constitutes a considerable technological advance, also this screw anchor has proved to entail drawbacks, the greatest being constituted by the fact that the alternating arrangement of non-concentric elliptical holes produces, in the screw cavity, a plurality of undercuts which requires complicated and expensive production equipment for molding the plastic body and for the subsequent assembly required to obtain the screw anchor in its final form.

Examples of expansion dowels suitable for fixing into materials with hollow spaces are available from the documents DE-A-34 16 797, DE-A-19 36 360 and US-A-4 596 503.

### Disclosure of the invention

The aim of the present invention is to provide a screw anchor which, though eliminating the drawbacks pointed out above in the first known screw anchor, can nonetheless be manufactured with simple and inexpensive injection molds and does not require additional treatments after molding.

Within the scope of this aim, a consequent primary object of the present invention is to provide a screw anchor which is suitable for generic couplings both in solid items and in hollow items.

Another important object of the present invention is to provide a screw anchor which can engage within the walls of a hole so as to provide a very strong retention.

Another object of the present invention is to provide a screw anchor which is advantageous from the point of view of production.

Another object of the present invention is to provide a screw anchor which can be manufactured at a competitive cost.

This aim, these objects and others which will become apparent hereinafter are achieved by a screw anchor according to the present invention, having in combination the features set forth in claim 1.

### Brief description of the drawings

Further characteristics and advantages of the present invention will become apparent from the following detailed description of some embodiments thereof, illustrated only by way of non-limitative example in the accompanying drawings, wherein:
figures 1 and 2 are respectively a side view and a sectional view of a first embodiment of the screw anchor body according to the present invention;
figures 3 and 4 are sectional views, taken along the plane III-III of figure 1, respectively in the inactive condition and during expansion, of the screw anchor body of figures 1 and 2;
figure 5 is a side view of a second embodiment of the screw anchor body according to the present invention;
figures 6 to 13 are sectional views, taken along planes which are similar to the plane III-III, of different embodiments of the screw anchor body in the inactive condition and during expansion;
figure 14 is a view of a screw anchor according to the present invention after fitting.

### Ways of carrying out the invention

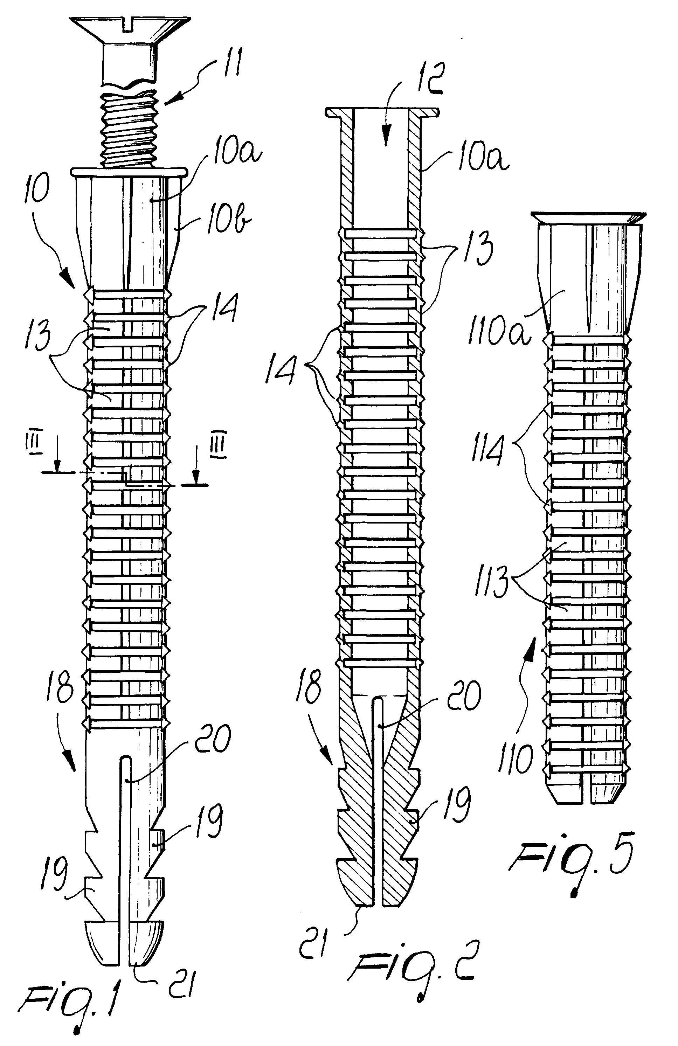

With reference to the above figures 1 to 4, a screw anchor is constituted by an expanding body 10 made of plastics and by an expansion screw 11.

The expanding body 10 has a cylindrical shape with an axial cavity 12 for the engagement of the screw 11.

According to the present invention, the expanding body 10 comprises, in this case, along part of its extension, after an end collar 10a with rotation-preventing radial wings 10b, a plurality of annular elements 13 which are mutually axially spaced and are mutually associated by connecting bridges 14, which in the present embodiment are aligned in two diametrically opposite series.

Each annular element 13 is composed of sectors 15 which are mutually connected by diaphragms 16 constituting rotation hinges.

As shown in particular in the embodiment illustrated in figure 3, each annular element 13 is composed of four sectors 15, which are joined by four diaphragms: two mutually opposite diaphragms 16a, which are located axially at the bridges 14, and two likewise mutually opposite diaphragms 16b, which are angularly spaced by 90 sexagesimal degrees from the other diaphragms.

Each one of the diaphragms 16b, in particular, is formed by a deep slot 17 in the material of the annular element 13.

As regards the axial cavity 12, at each annular element 13 it has a profile with regions which are narrower than the core diameter of the corresponding screw 11, and in the embodiment shown in figure 3 said profile is elliptical, with a major axis which intersects the hinges 16a and a minor axis which intersects the hinges 16b.

The combination of the elliptical shape of the cavity part 12 and of the slots 17 causes the sectors 15 to be substantially triangular.

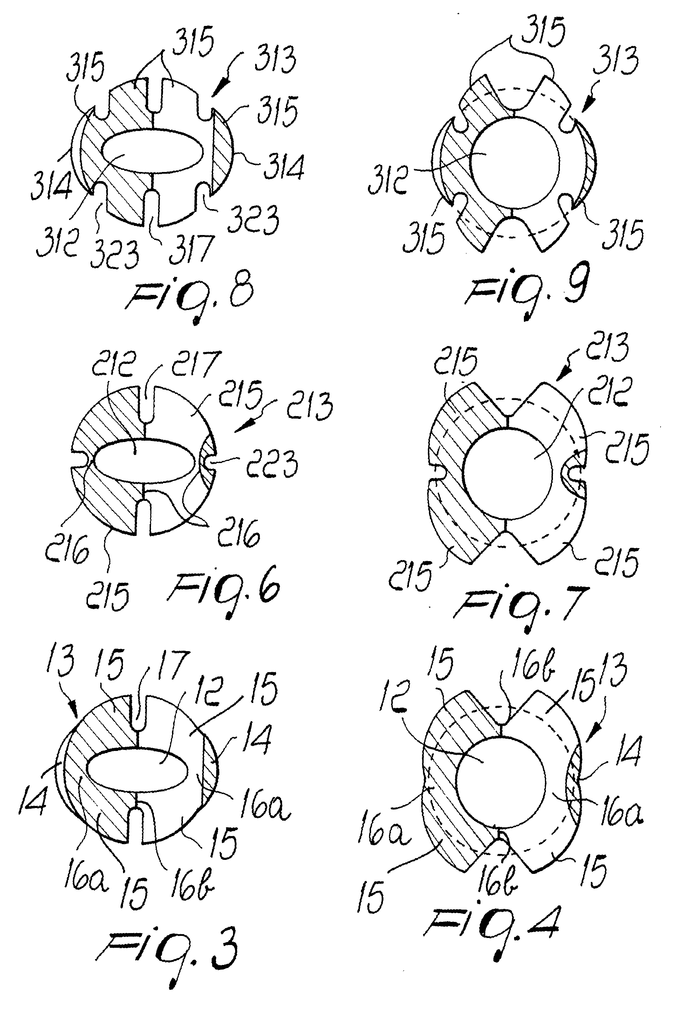

The penetration of the screw 11 in the axial cavity 12 deforms the elliptical portions of the cavity 12, as shown in figure 4, wherein the cavity 12 tends to become circular by adapting to the diameter of the screw 11 and by widening the narrow parts of the ellipse, causing rotations of the sectors 15 about the hinges 16a.

As an alternative to the elliptical profile it is also of course possible to provide other geometric shapes which provide an equivalent result, such as for example a rectangle, a rectangle with rounded corners, a diamond, two intersecting circles, etcetera.

It should also be noted that the various portions of the axial cavity 12 are all axially aligned, and so are the hinges 16a and 16b and the slots 17, and moreover that the expanding body 10 of the screw anchor, when inactive, does not have undercut regions and can therefore be produced with conventional injection molds.

In the expanded configuration, undercuts are formed on the outside due to the above-mentioned rotations of the sectors.

The undercuts create grip on the void regions of hollow bricks (figure 14), producing optimum fixing even in this kind of material.

In the case of holes formed in solid regions or in regions with void portions and solid portions, said sectors respectively adhere to the walls of the hole or locally adhere to the solid regions and rotate so as to form undercuts in the hollow regions.

It should also be noted at this point that the expanding body 10, in the present embodiment, has a portion 18 at the end for insertion in the hole which is shaped as in the conventional type of screw anchors, i.e., with two expanding regions 19 which are diametrically opposite to a slot 20 which extends from the end 21 for insertion in the hole.

In this case, therefore, a combination of the effects obtained with conventional screw anchors and of those according to the invention mentioned above is achieved.

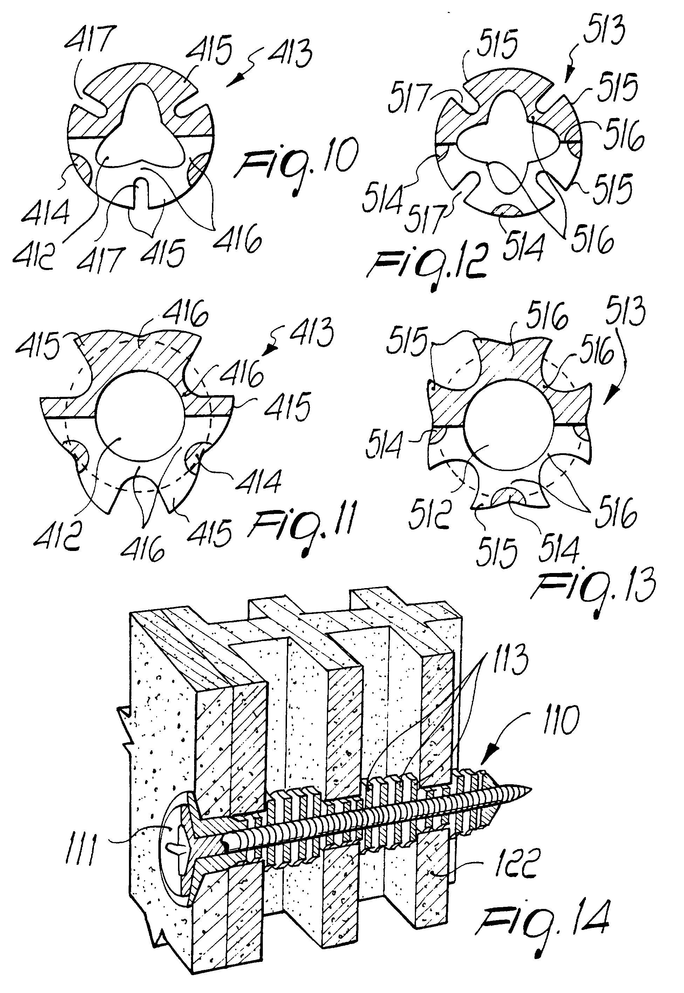

With reference now to the above figure 5, in a second embodiment the expanding body, now designated by the reference numeral 110, apart from the end collar region 110a which is located opposite to the end for insertion in the hole, is entirely composed of annular elements 113 such as the annular elements 13 described above and joined by connecting bridges 114.

Figure 14 is a view of the screw anchor related to the body of figure 5, with a screw 111, after fitting and insertion in a hollow brick 122.

Figures 6 to 13 illustrate different embodiments of the annular elements of which the expanding body of the screw anchor according to the present invention is composed.

In particular, figures 6 and 7 illustrate, in the inactive condition and in the expanded condition, an annular element 213 which is divided into four sectors 215 by four diaphragms 216 and in which the axial cavity portion 212 has an elliptical profile.

In practice, this embodiment differs from the embodiment of figures 3 and 4 in the provision of slots 223 at the major axis of the ellipse, in addition to the slots 217, which are equivalent to the previously mentioned slots 17.

Figures 8 and 9 illustrate, in the inactive condition and in the expanded condition, an annular element 313 which is divided into eight sectors 315 by slots 317, which are equivalent to the previous slots 17, and by four additional slots 323 which are parallel to said first slots.

The corresponding portion of the cavity 312, when inactive, is elliptical in this case too, with a minor axis which coincides with the centerline of the slots 317.

The bridges 314 that join the annular elements 313 are mutually opposite and lie on the major axis of the ellipse.

Figures 10 and 11 illustrate, in the inactive condition and in the expanded condition, an annular element 413 which is divided into six sectors 415 by slots 417 which are angularly arranged at 120 sexagesimal degrees to each other.

The corresponding axial cavity portion 412, when inactive, is composed in this case of a three-lobed oval in which the vertices are at 120 degrees to each other proximate to corresponding slots 417.

Six hinges 416 and three rows of connecting bridges 414, located proximate to the vertices of the three-lobed oval, are formed.

Finally, with reference to the above figures 12 and 13, a further embodiment illustrates an annular element 513 which is divided into eight sectors 515 with the cooperation of four slots 517 which are angularly spaced by 90 degrees with respect to each other.

The shape of the corresponding portion of the cavity 512 for the insertion of the screw, when inactive, is the combination of two ellipses arranged at right angles to each other, each ellipse being arranged so that its major semiaxis lies at the bisecting line of the axes of two consecutive slots 517.

Eight hinges 516 are provided, and four rows of bridges 514 are formed at the hinges located between two consecutive slots 517.

In practice it has been shown that the intended aim and objects of the present invention have been achieved.

The screw anchor, in all of its embodiments, is in fact able to eliminate the drawbacks of screw anchors with plastic bodies for general couplings, although it can be manufactured with conventional molds by virtue of the lack of undercuts in the internal regions, particularly of the cavity for the insertion of the expansion screw.

This of course means that the screw anchor can be manufactured at a competitive cost.

The invention thus conceived is susceptible of further modifications and variations, all of which are within the scope of the inventive concept.

All the details may furthermore be replaced with other technically equivalent elements.

In practice, the materials employed, so long as they are compatible with the contingent use, as well as the dimensions, may be any according to requirements.

## Claims

1. A screw anchor comprising an expanding body (10, 110) made of plastics which is cylindrical and has an axial cavity (12, 212, 312, 412, 512) for the insertion and engagement of an expansion screw (11, 111), said expanding body (10, 110) at least partially comprising a plurality of annular elements (13, 113, 213, 313, 413, 513) being axially spaced from each other and mutually associated by way of connecting bridges (14, 114, 314, 414, 514), **characterized in that** each one of said annular elements (13, 113, 213, 313, 413, 513) is composed of a plurality of interconnected disc sectors (15, 215, 315, 415, 515) separated from each other by slots (17, 217, 317, 417, 517) which extend inwardly towards said cavity (12, 212, 312, 412, 512) and end up each at a respective diaphragm (16, 216, 416, 516) connecting adjacent ones of said sectors (15, 215, 315, 415, 515), said diaphragms being constituted by flexible regions bordering said cavity (12, 212, 312, 412, 512), at least two of said regions, located in mutually opposing relationship (16b, 416, 516), being spaced from each other by a distance which is smaller than the core diameter of said expansion screw, so that upon insertion of the screw (11) in said cavity, said at least two flexible regions are pushed apart with the sectors (17, 217, 317, 417, 517) connected thereat spreading apart in a hinge like manner.

2. A screw anchor according to claim 1, **characterized in that** said connecting bridges (14, 114, 314, 414, 514) are aligned in two diametrically opposite series.

3. A screw anchor according to claim 1, **characterized in that** the various portions of said axial cavity (12, 212, 312, 412, 512) that belong to said annular elements are all axially aligned and **in that** said diaphragms (16, 216, 416, 516) are also axially aligned.

4. A screw anchor according to one or more of the preceding claims, **characterized in that** said expanding body (10), in inactive condition, is formed without undercut internal regions.

5. A screw anchor according to claim 1, **characterized in that** each said annular element (13, 113, 213) is composed of four sectors (15, 215) joined by four diaphragms (16a, 16b, 216).

6. A screw anchor according to claims 1 and 5, **characterized in that** said axial cavity (12, 212, 312, 412, 512) has, at each annular element (13, 113, 213, 313, 413, 513), the shape of an ellipse, of a rectangle, of a rectangle with rounded ends, of a diamond, of two intersecting circles, or other equivalent shapes with the major axes intersecting the diaphragms (16, 216, 416, 516) constituted by said opposing flexible regions.

7. A screw anchor according to claim 1, **characterized in that** said sectors (15, 215, 415, 515) are substantially triangular.

8. A screw anchor according to claim 1, **characterized in that** each of said annular elements (313) is divided into eight sectors (315) by two radial slots (317) and by four additional slots (323) which are parallel to said radial slots (317), the corresponding portion of said cavity (312) being shaped like an ellipse whose minor axis coincides with the centerline of said radial slots.

9. A screw anchor according to claim 1, **characterized in that** each of said annular elements (413) is divided into six sectors (415) with slots (417) arranged angularly at 120° sexagesimal degrees to each other, the corresponding portion of said axial cavity (412) being composed of a three-lobed oval whose vertices are located between adjacent corresponding slots (417).

10. A screw anchor according to claim 1, **characterized in that** said annular element (513) is divided into eight sectors (515) with slots (517) which are angularly spaced by 90° with respect to each other, the corresponding portion of said cavity (512) having a shape which is equal to the sum of two ellipses arranged at right angles to each other, so that the major semiaxis of each ellipse lies at the bisecting line of the angle formed by the axes of two consecutive slots (517).

11. A screw anchor according to one or more of the preceding claims, **characterized in that** it partially comprises a plurality of said annular elements (13) which are axially spaced from each other and are mutually associated by connecting bridges (14) and by a portion (18) at the end for insertion in a hole which is shaped so as to have two expanding regions (19) which are mutually opposite with respect to a diametrical slot (20) provided in the end (21) for insertion in the hole.

## Patentansprüche

1. Schraubenanker, mit einem zylindrischen Spreizkörper (10, 110) aus Kunststoff und einem axialen Hohlraum (12, 212, 312, 412, 512) zum Einführen und Eingreifen einer Spreizschraube (11, 111), wobei der Körper (10, 110) zumindest teilweise ringförmige Elemente (13, 113, 213, 313, 413, 513) aufweist, die axial voneinander beabstandet sind und über Verbindungsbrücken (14, 114, 314, 414, 514) gegenseitig einander zugeordnet sind, **dadurch gekennzeichnet, dass** jedes der ringförmigen Elemente (13, 113, 213, 313, 413, 513) aus einer Vielzahl miteinander verbundener Scheibensektoren (15, 215, 315, 415, 515) zusammengesetzt ist, die voneinander durch Schlitze (17, 217, 317, 417, 517) getrennt sind, die sich nach innen in Richtung des Hohlraumes (12, 212, 312, 412, 512) erstrecken und jeweils an einer jeweiligen Zwischenwand (16, 216, 416, 516) enden, die nebeneinanderliegende Sektoren (15, 215, 315, 415, 515) verbinden, wobei die Zwischenwände (16, 216, 416, 516) durch flexible Bereiche ausgebildet sind, die den Hohlraum (12, 212, 312, 412, 512) begrenzen, zumindest zwei der Bereiche, die in einem gegenseitig einander gegenüberstehenden Verhältnis (16b, 416, 516) angeordnet sind, sind voneinander in einer Entfernung beabstandet, die kleiner als der Kerndurchmesser der Spreizschraube ist, so dass nach Einführen der Schraube (11) in den Hohlraum zumindest zwei flexible Bereiche mit den Sektoren (17, 217, 317, 417, 517) verbunden auseinandergerückt werden und sich deswegen in einer gelenkartigen Art und Weise auseinanderspreizen.

2. Schraubenanker nach Anspruch 1, **dadurch gekennzeichnet, dass** die Verbindungsbrücken (14, 114, 314, 414, 514) in zwei diametral gegenüberliegenden Reihen ausgerichtet sind.

3. Schraubenanker nach Anspruch 1, **dadurch gekennzeichnet, dass** die verschiedenen Bereiche des axialen Hohlraumes (12, 212, 312, 412, 512), die zu den ringförmigen Elementen gehörig sind, alle axial ausgerichtet sind und dass die Zwischenwände (16, 216, 416, 516) ebenfalls axial ausgerichtet sind.

4. Schraubenanker nach einem oder mehreren der voranstehenden Ansprüche, **dadurch gekennzeichnet, dass** der Spreizkörper (10) in unbenutztem Zustand ohne hinterschnittene innere Bereiche ausgebildet ist.

5. Schraubenanker nach Anspruch 1, **dadurch gekennzeichnet, dass** jedes ringförmige Element (13, 113, 213) aus vier Sektoren (15, 215) zusammengesetzt ist, die durch vier Zwischenwände (16a, 16b, 216) verbunden sind.

6. Schraubenanker nach Anspruch 1 und 5, **dadurch gekennzeichnet, dass** der axiale Hohlraum (12, 212, 312, 412, 512) an jedem ringförmigen Element (13, 113, 213, 313, 413, 513) die Form eine Ellipse, eines Rechteckes, eines Rechteckes mit gerundeten Enden, einer Raute, zweier sich überschneidender Kreise oder anderer äquivalenter Formen hat, mit Hauptachsen, die die Zwischenwände (16, 216, 416, 516) schneiden, die durch die gegenüberliegenden flexiblen Bereiche ausgebildet sind.

7. Schraubenanker nach Anspruch 1, **dadurch gekennzeichnet, dass** die Sektoren (15, 215, 415, 515) im wesentlichen dreieckig sind.

8. Schraubenanker nach Anspruch 1, **dadurch gekennzeichnet, dass** jedes der ringförmigen Elemente (313) in acht Sektoren (315) durch zwei radiale Schlitze (317) und durch vier zusätzliche Schlitze (323) geteilt ist, die parallel zu den radialen Schlitzen (317) sind und der entsprechende Bereich des Hohlraumes (312) wie eine Ellipse geformt ist, dessen Nebenachse mit der Mittellinie der radialen Schlitze übereinstimmt.

9. Schraubenanker nach Anspruch 1, **dadurch gekennzeichnet, dass** jedes der ringförmigen Elemente (413) in sechs Sektoren (415) geteilt ist, mit Schlitzen (417), die winkelig mit 120° sexagesimal Grad zueinander angeordnet sind und dass der korrespondierende Bereich des axialen Hohlraumes (412) als ein dreibogiges Oval gebildet ist, dessen Senkrechten zwischen benachbarten korrespondierenden Schlitzen (417) angeordnet sind.

10. Schraubenanker nach Anspruch 1, **dadurch gekennzeichnet, dass** das ringförmige Element (513) in acht Sektoren (515) geteilt ist, mit Schlitzen (517), die winkelig zueinander um 90° beabstandet sind und dass der korrespondierende Bereich des Hohlraumes (512) eine Form hat, die gleich der Summe zweier Ellipsen ist, die in einem rechten Winkel zueinander angeordnet sind, so dass die Haupthalbachsen jeder Elipse auf der Winkelhalbierenden liegt, die von den Achsen zweier aufeinanderfolgender Schlitze (517) ausgebildet wird.

11. Schraubenanker nach einem oder mehreren der voranstehenden Ansprüche, **dadurch gekennzeichnet, dass** er teilweise eine Vielzahl der ringförmigen Elemente (13) aufweist, die axial voneinander beabstandet sind und die gegeneinander durch Verbindungsbrücken (14) einander zugeordnet sind und dass ereinen Bereich (18) an dem Ende zum Einführen in ein Loch aufweist, der so geformt ist, dass er zwei Spreizbereiche (19) hat, die sich bezüglich eines diametralen Schlitzes (20), der in dem Ende (21) zum Einführen in das Loch vorgesehen ist, einander gegenseitig gegenüberstehen.

## Revendications

1. Cheville pour vis comprenant un corps expansible (10, 110) en matière plastique cylindrique et ayant une cavité axiale (12, 212, 312, 412, 512) pour l'introduction et l'engagement d'une vis d'expansion (11, 111), ledit corps expansible (10, 110) comportant au moins partiellement une pluralité d'éléments annulaires (13, 113, 213, 313, 413, 513) espacés axialement les uns des autres et mutuellement associés par l'intermédiaire de ponts de liaison (14, 114, 314, 414, 514), **caractérisée en ce que** chacun desdits éléments annulaires (13, 113, 213, 313, 413, 513) est composé d'une pluralité de secteurs en forme de disques reliés les uns aux autres (15, 215, 315, 415, 515) et séparés les uns des autres par des fentes (17, 217, 317, 417, 517) qui s'étendent vers l'intérieur en direction de ladite cavité (12, 212, 312, 412, 512) et aboutissent chacune à un diaphragme respectif (16, 216, 416, 516) reliant ceux desdits secteurs (15, 215, 315, 415, 515) situés dans des positions adjacentes, lesdits diaphragmes étant constitués par des régions flexibles bordant ladite cavité (12, 212, 312, 412, 512), au moins deux desdites régions, se faisant mutuellement face (16b, 416, 516), étant espacées l'une de l'autre d'une distance inférieure au diamètre du noyau de ladite vis d'expansion, de telle sorte qu'au moment de l'insertion de la vis (11) dans ladite cavité, lesdites au moins deux régions flexibles sont poussées jusqu'à s'écarter l'une de l'autre, les secteurs (17, 217, 317, 417, 517) reliés au niveau de celles-ci se déployant à la manière d'une charnière.

2. Cheville pour vis selon la revendication 1, **caractérisée en ce que** lesdits ponts de liaison (14, 114, 314, 414, 514) sont alignés en deux séries diamétralement opposées.

3. Cheville pour vis selon la revendication 1, **caractérisée en ce que** les diverses parties de ladite cavité axiale (12, 212, 312, 412, 512) qui appartiennent auxdits éléments annulaires sont toutes alignées axialement et **en ce que** lesdits diaphragmes (16, 216, 416, 516) sont eux aussi alignés axialement.

4. Cheville pour vis selon une ou plusieurs des revendications précédentes, **caractérisée en ce que** ledit corps expansible (10), au repos, est formé sans régions internes creusées.

5. Cheville pour vis selon la revendication 1, **caractérisée en ce que** chaque dit élément annulaire (13, 113, 213) est composé de quatre secteurs (15, 215) réunis par quatre diaphragmes (16a, 16b, 216).

6. Cheville pour vis selon les revendications 1 et 5, **caractérisée en ce que** ladite cavité axiale (12, 212, 312, 412, 512) a, au niveau de chaque élément annulaire (13, 113, 213, 313, 413, 513), la forme d'une ellipse, d'un rectangle, d'un rectangle à extrémités arrondies, d'un losange, de deux cercles sécants, ou d'autres formes équivalentes, les grands axes croisant les diaphragmes (16, 216, 416, 516) étant constitués par lesdites régions flexibles opposées.

7. Cheville pour vis selon la revendication 1, **caractérisée en ce que** lesdits secteurs (15, 215, 415, 515) sont sensiblement triangulaires.

8. Cheville pour vis selon la revendication 1, **caractérisée en ce que** chacun desdits éléments annulaires (313) est divisé en huit secteurs (315) par deux fentes radiales (317) et par quatre fentes supplémentaires (323) parallèles auxdites fentes radiales (317), la partie correspondante de ladite cavité (312) ayant la forme d'une ellipse dont le petit axe coïncide avec l'axe central desdites fentes radiales.

9. Cheville pour vis selon la revendication 1, **caractérisée en ce que** ledit élément annulaire (413) est divisé en six secteurs (415) par des fentes (417) ménagées avec un angle de 120 degrés sexagésimaux les unes par rapport aux autres, la partie correspondante de ladite cavité axiale étant composée d'un ovale trilobé dont les sommets sont situés entre des fentes adjacentes correspondantes (417).

10. Cheville pour vis selon la revendication 1, **caractérisée en ce que** ledit élément annulaire (513) est divisé en huit secteurs (515) par des fentes (517) à espacement angulaire mutuel de 90°, la partie correspondante de ladite cavité (512) ayant une forme égale à la somme de deux ellipses disposées à angle droit l'une par rapport à l'autre, de telle sorte que le demi-grand axe de chaque ellipse se trouve sur la bissectrice de l'angle formé par les axes de deux fentes consécutives (517).

11. Cheville pour vis selon une ou plusieurs des revendications précédentes, **caractérisée en ce qu'**elle comprend partiellement une pluralité desdits éléments annulaires (13) espacés axialement les uns des autres et mutuellement associés par des ponts de liaison (14) et par une partie (18) à l'extrémité à insérer dans un trou configurée de manière à avoir deux régions expansibles (19) mutuellement opposées par rapport à une fente diamétrale (20) ménagée dans l'extrémité (21) à insérer dans le trou.
